**Europäisches Patentamt**

**European Patent Office**

**Office européen des brevets**

(19)

(11) Numéro de publication: **0 185 561**
**B1**

(12) # FASCICULE DE BREVET EUROPEEN

(45) Date de publication du fascicule du brevet:
**01.06.88**

(51) Int. Cl.⁴: **G 21 C 19/00**, G 21 C 17/10

(21) Numéro de dépôt: **85402023.7**

(22) Date de dépôt: **18.10.85**

(54) **Dispositif de nettoyage des tubes de guidage des moyens de mesure de flux neutroniques dans un réacteur nucléaire à eau sous pression.**

(30) Priorité: **13.11.84 FR 8417311**

(43) Date de publication de la demande:
**25.06.86 Bulletin 86/26**

(45) Mention de la délivrance du brevet:
**01.06.88 Bulletin 88/22**

(84) Etats contractants désignés:
**BE CH DE GB LI SE**

(56) Documents cités:
**FR - A - 2 081 077**
**FR - A - 2 483 671**
**FR - A - 2 542 126**
**US - A - 4 313 793**

(73) Titulaire: **FRAMATOME ET CIE., Tour Fiat 1, Place de la Coupole, F-92400 Courbevoie (FR)**

(72) Inventeur: **Cadaureille Gérard, 7 chemin du Branchu St Bonnet de Mures, F-69720 St Laurent de Mures (FR)**
Inventeur: **Cresson, Patrick, 11 rue Hector Berlioz, F-69006 Lyon (FR)**
Inventeur: **Vecchionacci, Claude, 4 rue Alxis Carrel, F-71100 Chalon-sur-Saone (FR)**

(74) Mandataire: **Bressand, Georges et al, c/o CABINET LAVOIX 2 Place d'Estienne d'Orves, F-75441 Paris Cedex 09 (FR)**

ACTORUM AG

## Description

L'invention concerne un dispositif de nettoyage des tubes de guidage des moyens de mesure de flux neutronique dans un réacteur nucléaire à eau sous pression.

Les réacteurs nucléaires à eau sous pression comportent un coeur formé d'assemblages de forme prismatique disposé verticalement et reposant sur une plaque de support, à l'intérieur de la cuve du réacteur nucléaire.

Pendant le fonctionnement du réacteur nucléaire, il est nécessaire de réaliser périodiquement des mesures de flux à l'intérieur même du coeur. On utilise pour cela des détecteurs à fission de très petites dimensions qui sont déplacés par commande à distance à l'aide de câbles téléflex à l'intérieur de tubes fermés à l'une de leurs extrémités appelés doigts de gant. Les doigts de gant sont introduits suivant une répartition prédéterminée dans toute la hauteur de certains assemblages du coeur après passage à l'intérieur de tubes d'instrumentation. Par déplacement des détecteurs de flux à l'intérieur des doigts de gant introduits dans les assemblages, on peut effectuer des mesures de flux suivant toute la hauteur du coeur. Les doigts de gant doivent pouvoir être extraits des assemblages du coeur, par exemple pour faciliter les opérations de rechargement du coeur du réacteur; pour cela, on exerce une traction sur l'extrémité des doigts de gant, depuis un local d'instrumentation disposé latéralement par rapport au puits de cuve du réacteur. Les doigts de gant sont disposés dans des tubes de guidage dont l'une des extrémités débouche dans le local d'instrumentation et dont l'autre extrémité dans le volume intérieur de la cuve par l'intermédiaire d'une manchette verticale de traversée du fond de cuve de forme bombée. Entre ces deux extrémités, le tube de guidage comporte une partie coudée ayant un rayon de courbure relativement grand.

Les équipements internes inférieurs du réacteur comportent outre la plaque de support du coeur sur laquelle repose les assemblages, l'enveloppe et le cloisonnement du coeur et un ensemble d'éléments disposés entre la plaque de support du coeur et le fond bombé inférieur de la cuve comportant en particulier des colonnes de guidage de l'instrumentation creuses dont l'alésage est dans le prolongement de l'alésage des manchettes de traversée des tubes de guidage. Le conduit central de ces colonnes de guidage débouche sur la face supérieure de la plaque de support du coeur dans l'alignement d'un tube d'instrumentation d'un assemblage reposant sur la plaque de support.

Le diamètre intérieur des tubes de guidage, des colonnes de guidage et des tubes d'instrumentation des assemblages est tel qu'un jeu suffisant subsiste entre le doigt de gant et son conduit de guidage. On peut donc manoeuvrer facilement les doigts de gant par traction et poussée pour les extraire du coeur sur toute la hauteur de celui-ci (c'est à dire sur une longueur voisine de 4 mètres) et pour les réintroduire dans le coeur, respectivement.

On s'est aperçu cependant, qu'après un certain temps de fonctionnement du réacteur, l'effort nécessaire pour extraire les doigts de gant et surtout l'effort nécessaire pour les réinsérer, augmentait sensiblement.

Par exemple, l'effort d'insertion des doigts de gant qui est de 100 à 150 Newton sur un réacteur à sa mise en service augmente jusqu'à une valeur de 400 à 500 Newton après le second rechargement. On a pu attribuer cette augmentation de l'effort d'insertion des doigts de gant à la présence de particules solides venant se déposer entre le doigt de gant et la paroi interne du tube de guidage, en particulier au voisinage du coude de ce tube de guidage. En effet, les doigts de gant provoquent, pendant leur déplacement une accumulation de particules dans la région du coude et favorisent leur tassement.

On a donc proposé un procédé de nettoyage des tubes de guidage au moment des opérations de rechargement du coeur du réacteur. La cuve est alors ouverte à sa partie supérieure et en communication avec la piscine du réacteur, l'ensemble étant rempli d'eau. Pour la mise en oeuvre du procédé de nettoyage, on a prévu des moyens d'injection d'eau déminéralisée sous pression dans les tubes de guidage par leur extrémité débouchant dans le local de l'instrumentation.

Il est cependant nécessaire de récupérer cette eau déminéralisée et les particules qu'elle contient en suspension à l'autre extrémité des tubes de guidage.

Dans les réacteurs nucléaires actuellement en service, on prévoit 50 tubes de guidage traversant le fond bombé de la cuve par l'intermédiaire de 50 manchettes régulièrement réparties sur ce fond bombé et disposées en-dessous des équipements internes inférieurs du réacteur. Les manchettes débouchent elles mêmes avec un jeu important dans l'alésage de la partie inférieure des colonnes de guidage faisant partie des équipements internes inférieurs.

Il est donc nécessaire de récupérer l'eau déminéralisée de nettoyage renfermant les particules qui sont radio-actives, à la sortie des manchettes de traversée. Pour accéder à ces manchettes, on démonte donc les équipements internes inférieurs qui sont extraits de la cuve, les équipements internes supérieurs et les assemblages du coeur ayant été préalablement extraits.

On vient mettre successivement en place sur l'extrémité de chacune des manchettes, pendant l'injection d'eau sous pression dans le tube de guidage correspondant, des moyens de récupération de l'eau et des particules radio-actives.

Ces moyens sont mis en place depuis la passerelle de la machine de chargement, au-dessus de la piscine du réacteur, grâce à une perche de très grande longueur portant à sa partie inférieure une caméra permettant de visualiser les opérations de mise en place des moyens de récupération. Ces moyens comportent une coiffe cylindrique munie intérieurement d'un joint d'un diamètre correspondant au diamètre de la manchette, un tube flexible communiquant avec le volume intérieur de la coiffe cylindrique sur lequel est diposée une vanne commandée par une tringlerie depuis la passerelle et un ensemble de filatration auquel aboutit le tube flexible au-dessus du niveau de la piscine.

La réalisation de ces opérations est délicate et leur contrôle par une caméra solidaire de l'extrémité inférieure de la perche ne peut être réalisé dans de très bonnes conditions.

D'autre part, pour la mise en oeuvre de ce procédé, il est nécessaire d'extraire les internes inférieurs de la cuve donc de les remettre en place après l'operation. L'opération d'extraction comme l'opération de remise en place des internes inférieurs présente des risques importants.

Le but de l'invention est donc de proposer un dispositif de nettoyage des tubes de guidage des moyens de mesure de flux neutronique, dans un réacteur nucléaire à eau sous pression à l'arrêt comportant une cuve renfermant des équipements internes de support et de maintien des assemblages combustibles du coeur, ou équipements internes inférieurs, disposés au-dessus du fond bombé de la cuve et comportant, en particulier, une plaque de support du coeur horizontale, une piscine communiquant avec le volume intérieur de la cuve, l'ensemble étant rempli d'eau, une machine de chargement du combustible mobile au-dessus de la piscine dans un plan horizontal comportant en particulier une passerelle et un treuil de manutention dans la direction verticale susceptible de venir à la verticale de tous les points du fond de cuve, un bâtiment renfermant la piscine et la cuve, à l'intérieur d'un puits de cuve, ainsi qu'un local d'instrumentation disposé latéralement par rapport au puits de cuve dans lequel pénètre l'une des extrémités des tubes de guidage joignant chacun par un parcours comportant un coude, le local d'instrumentation au volume intérieur de la cuve dans lequel le tube de guidage débouche par une manchette verticale de traversée du fond de cuve, dans l'alignement d'une colonne de guidage dont le conduit central de guidage débouche sur la face supérieure de la plaque de support de coeur au niveau d'une traversée correspondant à une position de pénétration des moyens de mesure de flux dans un assemblage, le dispositif de nettoyage comportant des moyens d'injection d'eau déminéralisée dans chacun des tubes de guidage, disposée dans le local d'instrumentation et des moyens de récupération de l'eau chargée en particules radio-actives à la sortie de la manchette verticale comportant un tube flexible relié à une station de filtration disposée au-dessus de la piscine du combustible, ce dispositif de nettoyage permettant de rendre beaucoup plus simples et beaucoup plus sûres, les opérations pour sa mise en place et pour sa mise en oeuvre.

A cette fin, dans le but d'effectuer leur mise en place et la récupération des particules radioactives sans extraire les équipements internes de la cuve du réacteur dont seuls ont été extraits les équipements internes supérieurs et les assemblages du coeur, les moyens de récupération comportent:

une poutre profilée creuse suspendue verticalement par sa partie supérieure au treuil de manutention, par l'intermédiaire d'un élément de suspension sur lequel la poutre est montée rotative autour de son axe vertical,

une platine de fixation montée à l'extrémité inférieure de la poutre rotative autour de l'axe de cette poutre et comportant des premiers moyens de positionnement destinés à coopérer avec des seconds moyens de positionnement correspondant à un assemblage prévu sur la plaque de support du coeur et des moyens de blocage en des positions angulaires fixes de la poutre sur la platine,

un premier boîtier monté mobile dans la poutre creuse dans sa direction axiale portant une aiguille creuse à pointe excentrée, de direction axiale, à son extrémité inférieure, munie de joints déformables sur sa surface externe et une vanne à trois voies dont une voie communique avec l'espace intérieur de l'aiguille, une seconde voie avec le tube flexible et dont la troisième voie est dans le prolongement de la première,

un second boîtier portant une source lumineuse, un fibroscope, une caméra de télévision et un dispositif de mise en tension du fibroscope mobile axialement dans le premier boîtier au-dessus de la vanne à trois voies,

deux treuils de commande du déplacement axial du boîtier associés chacun à un boîtier et fixés sur la passerelle de la machine de chargement par l'intermédiaire d'un support dans lequel la poutre est montée rotative autour de son axe vertical, et

des moyens de visualisation et de commande disposées sur la passerelle de la machine de chargement pour la mise en place contrôlée de l'aiguille dans l'alésage de la manchette.

Afin de bien faire comprendre l'invention, on va maintenant décrire, en se référant aux figures jointes en annexe, un mode de réalisation du dispositif de nettoyage suivant l'invention utilisable dans le cas d'un réacteur nucléaire à eau sous pression d'un type actuellement en service et d'une puissance de 900 ou de 1300 MW.

La fig. 1 est une vue très schématique du dispositif en service pour une opération de nettoyage d'un tube de guidage;

la fig. 2 est une vue en coupe dans un plan vertical d'une manchette de traversée d'un tube de guidage et des équipements internes supérieurs se trouvant au-dessus de cette manchette;

la fig. 3 est une vue très schématique de l'ensemble du dispositif de nettoyage;

la fig. 4 est une vue partielle en coupe par un plan vertical de la poutre du dispositif de nettoyage;

la fig. 4a est une vue en coupe suivant A-A de la fig. 4;

la fig. 4b est une vue en coupe suivant B-B de la fig. 4;

la fig. 4c est une vue en coupe suivant C-C de la fig. 4;

la fig. 5 est une vue en élévation latérale du premier et du second boîtiers du dipositif;

la fig. 6 est une vue en coupe dans un plan vertical axial de l'ensemble des deux boîtiers représentés à la fig. 6;

la fig. 6a est une vue en coupe suivant D-D de la fig. 6;

la fig. 6b est une vue agrandie de la partie antérieure du boîtier représenté sur la fig. 6 comprenant en particulier une aiguille à pointe excentrée;

la fig. 6c est une vue en coupe suivant E-E de la fig. 6;

la fig. 6d est une vue en coupe suivant F-F de la fig. 6;

la fig. 6e est une vue latérale agrandie de la partie antérieure du premier boîtier comportant la vanne à trois voies;

la fig. 6f est une vue en coupe suivant G-G de la fig. 6;

les figures 7a, 7b et 7c sont des vues schématiques montrant les trois positions fonctionnelles de la vanne à trois voies.

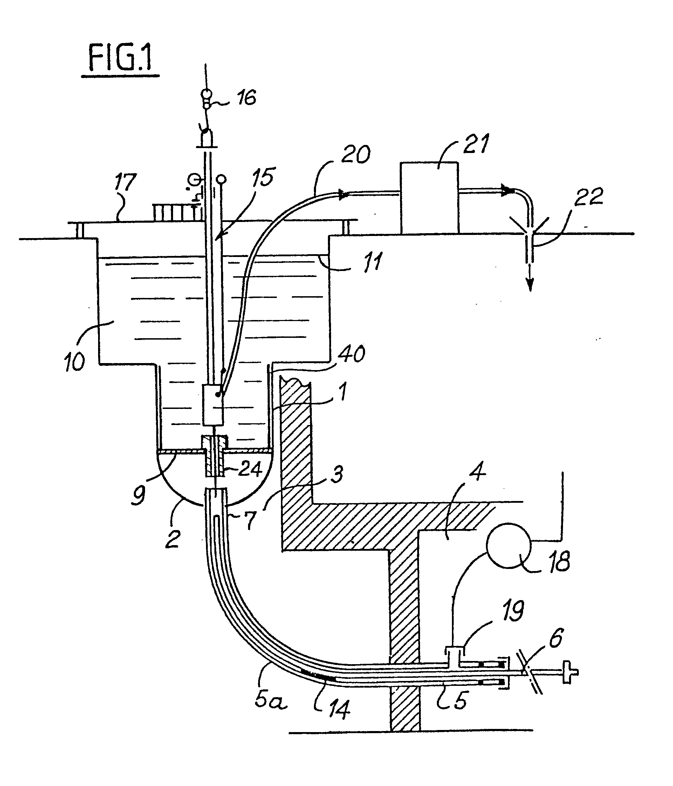

Sur la fig. 1, on a représenté de façon très schématique, le dispositif de nettoyage en position de service dans la cuve du réacteur nucléaire. La cuve 1 dont a représenté la partie inférieure comportant un fond bombé 2 est diposée dans un puits de cuve 3 faisant partie de la structure du bâtiment réacteur. Latéralement par rapport au puits de cuve 3 est prévu un local d'instrumentation 4 dans lequel pénètrent par des ouvertures dans sa paroi de béton, les tubes de guidage 5 de l'instrumentation. Sur la fig. 1, on a représenté un tube 5 considérablement élargi dans la direction diamétrale, pour montrer la structure de ce tube et l'instrumentation qu'il renferme.

Dans les réacteurs nucléaires actuellement à l'exploitation, on utilise un ensemble comportant à peu près 50 tubes de guidage tels que le tube 5 qui permet de guider un doigt de gant 6 pour son insertion dans le coeur ou pour son extraction. Pour les mesures de flux neutronique, un détecteur miniature peut être déplacé par un système téléflex à l'intérieur du doigt de gant 6 lui-même introduit dans un tube d'instrumentation d'un assemblage du coeur.

Le tube de guidage 5 comporte un coude 5a à grand rayon de courbure pour faire passer le doigt de gant 6 d'un parcours horizontal dans le local d'instrumentation 4 à un parcours vertical dans la cuve du réacteur nucléaire. Les doigts de gant peuvent être déplacés dans le tube de guidage par poussée ou traction depuis le local 4.

Les tubes de guidage 5 traversent le fond bombé inférieur 2 de la cave 1 par l'intermédiaire de manchettes verticales telles que 7.

Au-dessus du fond bombé 2 est disposée dans la cuve, une plaque inférieure de support du coeur 9 sur laquelle viennent reposer les assemblages, par l'intermédiaire de leur embout inférieur.

Le nettoyage des tubes de guidage 5 comme représenté sur la fig. 1 est effectué pendant les opérations de rechargement du coeur, la cuve de réacteur étant ouverte à sa partie supérieure et en communication avec la piscine 10, la cuve 1 et la piscine 10 étant l'une et l'autre remplie d'eau jusqu'au niveau 11. Les équipements internes supérieurs du réacteur disposés au-dessus du coeur ainsi que le coeur ont été extraits de la cuve.

En revanche, les équipements internes inférieurs comportant en particulier la plaque de support 9 du coeur sont restés dans la cuve. Le dispositif 15 représenté très schématiquement sur la fig. 1 permet en effet, comme il sera expliqué ci-dessous, d'effectuer le nettoyage avec les internes inférieurs en place.

Le dispositif 15 est suspendu à un treuil de manutention 16 qui peut être associé à la machine de chargement dont la passerelle 17 est utilisée pour le maintien latéral et la commande du dispositif 15.

Pendant le fonctionnement du réacteur, des particules solides, telles que des particules d'oxyde ou de métal 14 sont déposées entre le doigt de gant 6 et la surface intérieure du tube de guidage 5, dans la zone 5a du coude de ce tube de guidage.

Préalablement à l'extraction des assemblages du coeur, lors des opérations de rechargement, on a extrait les doigts de gant 6 de ces assemblages par traction depuis le local 4, comme représenté sur la fig. 1. L'extrémité supérieure fermée des doigts de gant est alors à un niveau inférieur au niveau du fond de cuve traversé par la manchette 7. Les déplacements des doigts de gant 6 dans les tubes de guidage 5 provoquent l'accumulation et le tassement des particules 14 dans la zone du coude, si bien que lorsqu'on désire réintroduire les doigts de gant 6 dans les assemblages après rechargement du coeur, l'effort à exercer sur ces doigts de gant peut devenir excessif.

L'opération de nettoyage utilisant l'outillage représenté de façon très schématique sur la fig. 1 vise à éliminer les particules 14 par injection d'eau déminéralisée sous pression grâce à une pompe 18 située dans le local 4 injectant de l'eau dans un piquage 19 prévu à l'extrémité du tube de guidage 5 à l'intérieur du local 4. Un système de connexion rapide permet de brancher cette pompe puis d'injecter l'eau déminéralisée successivement dans chacun des 50 tubes de guidage 5.

Avant l'injection d'eau déminéralisée sous pression dans un tube de guidage 5, le dispositif 15 est amené à la verticale de ce tube de façon que les moyens de récupération des effluents liquides renfermant des particules solides 14 puissent assurer le tranfert de ces effluents enfermant des particules radio-actives, par l'intermédiaire d'un tube flexible 20, vers un poste de filtration 21 et de là vers un circuit d'élimination d'effluents liquides 22.

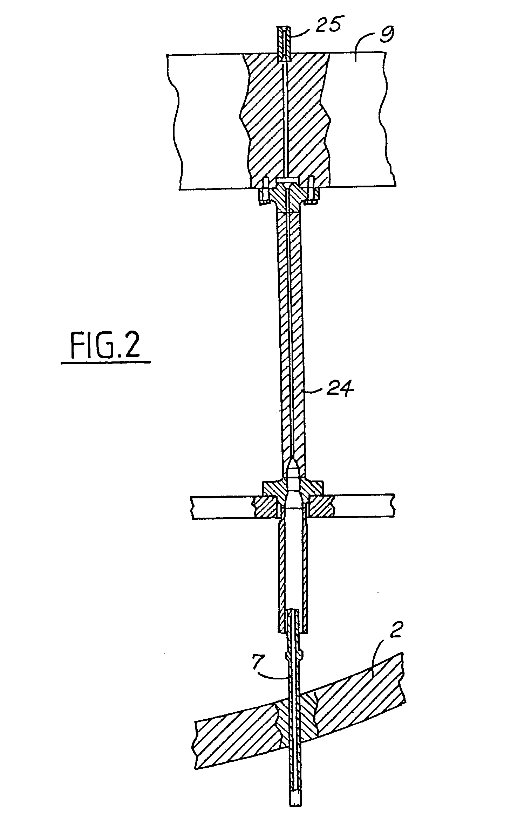

Sur la fig. 2, on voit le fond de cuve 2 traversé par une manchette 7 constituant l'extrémité de pénétration dans la cuve d'un tube de guidage d'instrumentation 5. L'extrémité supérieure de cette manchette 7 débouche dans une colonne de guidage verticale 24 faisant partie des équipements internes inférieurs du réacteur et fixée sur la face inférieure de la plaque de support de coeur 9. Au-dessus de la plaque inférieure de support de coeur 9, un embout de guidage 25 permet de guider le doigt de gant 6, lors de sa réintroduction dans le coeur, dans le tube de guidage d'instrumentation de l'assemblage correspondant venant en position sur la plaque 9 à la verticale de la colonne 24.

On voit sur la fig. 2, qu'il est nécessaire de venir récupérer les effluents contenant les particules radio-actives à l'intérieur même de la manchette 7, à sa partie supérieure, puisque cette manchette débouche avec un jeu assez important dans la colonne de guidage 24 des équipements internes inférieurs. De plus, il peut y avoir un excentrement plus ou moins important de la manchette à l'intérieur de l'alésage de la colonne 24 à sa partie inférieure.

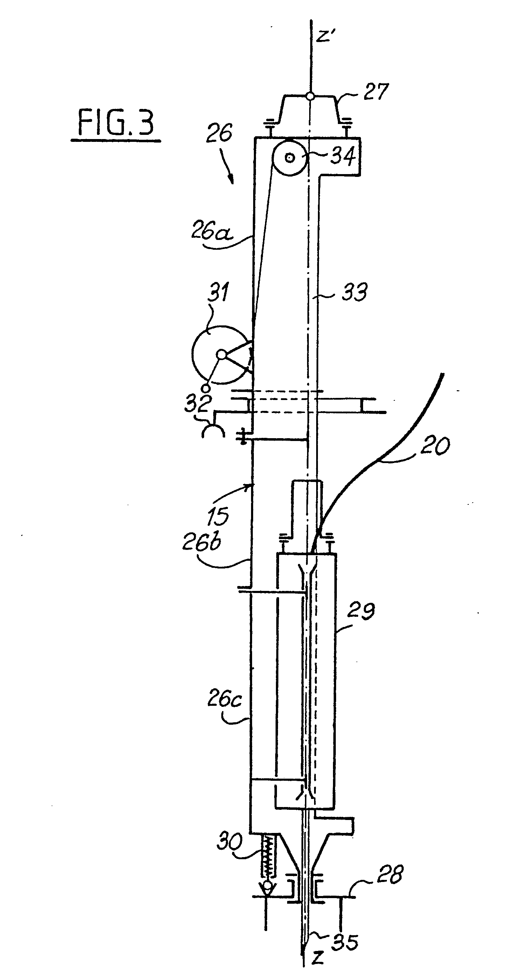

Le dispositif 15 qui sera décrit en détail en se référant aux fig. 3 à 6, permet de réaliser à distance et avec une très grande sûreté la mise en place d'un outil de récupération des effluents à l'intérieur de la manchette 7.

Sur la fig. 3, on voit représenté de façon schématique l'ensemble du dispositif 15 comportant une poutre 26 en plusieurs tronçons 26a, 26b, 26c une anse de manutention 27, une platine 28 de positionnement sur la plaque inférieure de coeur 9 et un boîtier 29 mobile verticalement à l'intérieur de la poutre 26.

La poutre 26 est montée rotative autour de son axe vertical Z-Z' sur l'anse de manutention 27 et la platine 28 est elle-même montée rotative autour de l'axe Z-Z' sur la partie inférieure de la poutre 26. Un dispositif de blocage en rotation 30 permet d'immobiliser dans certaines positions angularies, la platine 28 par rapport à la poutre 26. Un ensemble de deux treuils 31 fixés par l'intermédiaire d'un support 32 sur la rembarde de la passerelle 17 de la machine de chargement du réacteur permet grâce à des câbles 33 et à des poulies de renvoi 34 fixés sous l'anse de manutention 27 de déplacer les boîtiers 29 à l'intérieur de la poutre 26 dans la direction verticale. Le support 32 des poulies 31 permet de plus de maintenir latéralement contre les mouvements de balancement, la poutre 26.

Le boîtier 29 est prolongé à sa partie inférieure dans la direction verticale par une aiguille 35 constituant l'élément mobile de récupération des effluents qui sera introduit dans l'alésage intérieur de la manchette 27.

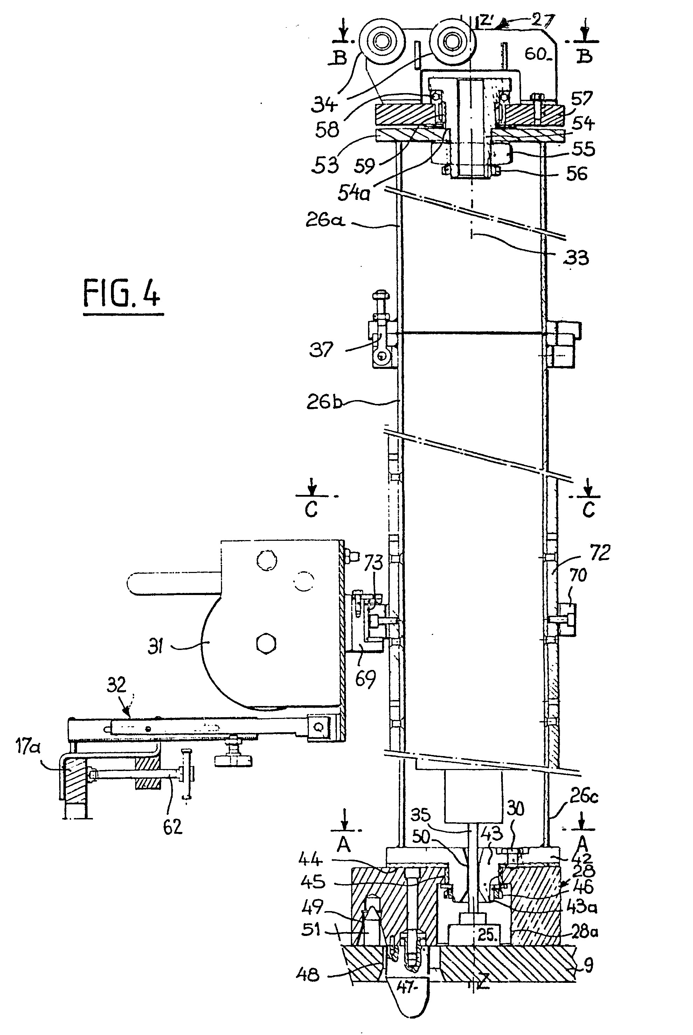

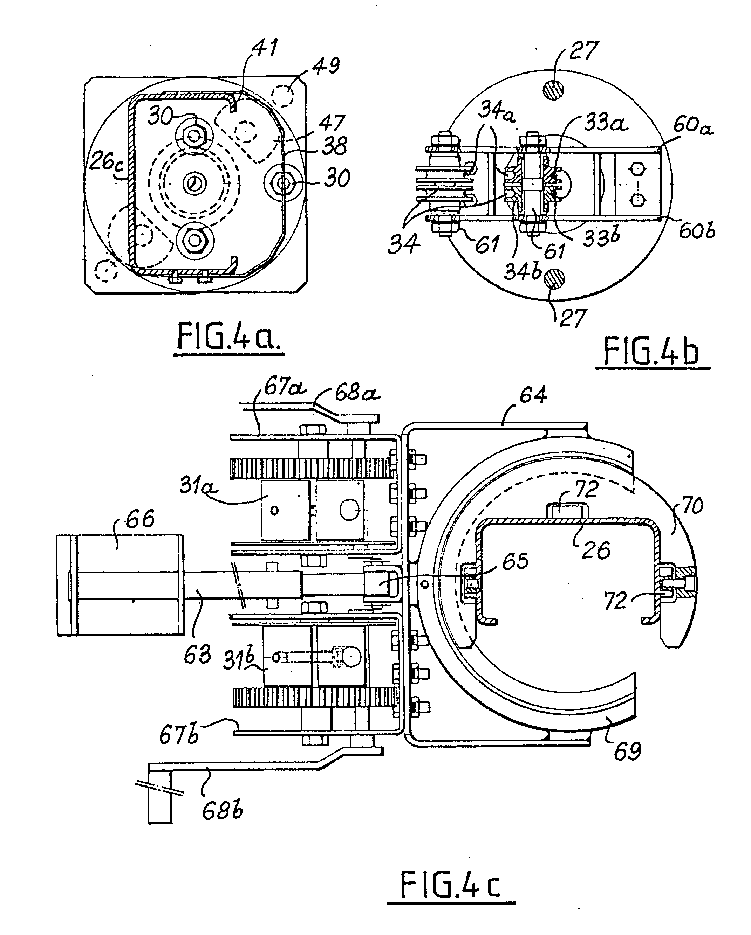

On va maintenant se reporter aux fig. 4, 4a, 4b et 4c pour décrire plus en détail la poutre 26, son élément de suspension supérieure 27 et son élément de positionnement inférieur 28 ainsi que les treuils 31 et leur support 32.

Sur la fig. 4, seules certaines parties de la poutre 26 ont été représentées, les autres parties de cette poutre de très grande longueur (de l'ordre de 25 m dans le cas des réacteurs actuellement en service) ne présentant pas de détails caractéristiques. Les chariots représentés schématiquement sur la fig. 3 n'ont également pas été représentés à l'intérieur de la poutre 26.

Les tronçons successifs 26a, 26b et 26c de la poutre sont reliés par un ensemble de liaisons 37 comportant des brides, des axes articulés et filetés à leurs extrémités et des écrous. Les dispositifs 37 permettent d'assembler ou de démonter très rapidement les diverses sections de la poutre pour son installation ou au contraire son extraction de la piscine du réacteur.

Le dernier tronçon 26c de la poutre dont la section est visible sur la fig. 4a est fermé sur toute sa longueur par un capot 38 permettant d'éviter la chute de pièces mécaniques telles qu'un boulon dans la piscine du réacteur. La longueur de ce dernier tronçon 26c est telle que sa partie supérieure comportant ses moyens de liaison 37 au tronçon 26b soit à un niveau supérieur à celui de la partie la plus haute du cloisonnement 40 du réacteur visible sur la fig. 1 faisant partie des équipements internes inférieurs du réacteur et maintenus dans la cuve pendant les opérations de nettoyage des tubes de guidage. Le poutre 26 comporte sur toute sa longueur des bords repliés 41 visibles sur la fig. 4a constituant des rails de guidage du chariot 29, ainsi qu'il sera expliqué ci-après.

La partie inférieure du tronçon 26c de la poutre 26 est soudée sur une plaque d'embase circulaire 42 comportant un prolongement cylindrique 43 fileté sur sa partie terminale inférieure 43a. Cette pièce d'embase 42 est montée rotative dans la platine 28 qui comporte une ouverture centrale 28a permettant le passage de la pièce de guidage 25 de l'instrumentation et le montage rotatif autour de l'axe vertical Z-Z' du prolongement 43 dans la platine 28. Une rondelle 44 et une bague 45 anti-friction sont intercalées entre la platine 28 et l'embase 42 pour assurer un glissement entre ces deux pièces, un écrou 46 venant en prise avec le filetage 43a permet de fixer la platine 28 sur l'embase 42 et la poutre 26.

La platine 28 porte deux pions de pré-centrage 47 destinés à venir s'engager dans des ouvertures 48 de passages d'eau traversant la plaque inférieure de support de coeur 9 à la verticale d'une position d'assemblage. La platine 28 comporte également deux trous de centrage 49 dans des positions correspondantes à la position des pions de centrage 51 fixés sur la face supérieure de la plaque de support 9 pour recevoir un assemblage. Enfin, l'embase 42 est traversée par une ouverture calibrée 50 ayant des extrémités tronconiques de guidage pour le passage guidé de l'aiguille 35 solidaire du chariot 29 se déplaçant à l'intérieur de la poutre 26 suivant son axe Z-Z'.

On comprend que lorsque le dispositif de récupération d'effluents 15 est déplacé grâce au treuil de manutention 16, d'une position d'un assemblage recevant des moyens de mesure de flux à une autre position d'assemblage recevant également des moyens de mesure de flux pour le nettoyage des tubes de guidage correspondant, le pré-centrage de la platine 28 fixée à la base de la poutre 26, puis le centrage et le positionnement de cette platine, sont assurés par la coopération des éléments 47, 48 et 49, 51. On peut ensuite orienter la poutre 26 par rapport à la platine 28 de façon précise et assurer le blocage en rotation de la poutre par rapport à la platine grâce aux trois dispositifs de blocage 30 comportant une vis, un ressort et une bille de blocage venant dans un logement prévus sur la face supérieure de la platine 28.

La platine 28 doit être adaptée à la disposition des moyens de fixation d'assemblage usinés sur la plaque inférieure de coeur 9. On a prévu deux types de platine, l'un adapté au moyen de centrage en pied des assemblages des réacteurs nucléaires à eau sous pression à trois boucles d'une puissance de 900 MWe et les autres adaptés au moyen de centrages en pied des assemblages des réacteurs nucléaires à eau sous presssion à quatre boucles d'une puissance de 1300 MWe.

On va maintenant décrire la tête de manutention de la poutre 26 disposée à sa partie supérieure, en se référant aux fig. 4 et 4b. Le tronçon supérieur 26a de la poutre est relié à sa partie supérieure à une plaque 53 circulaire et percée d'une ouverture centrale. Dans cette ouverture est montée un moyen creux 54 fixé sur la plaque 53 par un écrou 55 et un contre-écrou 56 venant en prise sur une partie filetée de la surface externe du moyeu 54. Le moyeu vient en appui sur la face supérieure de la plaque 53 par un épaulement 54a. Le dispositif de suspension est constitué par l'anse de manutention 27 qui est solidaire d'une plaque circulaire de suspension 57, comportant une ouverture centrale dans laquelle le moyeu 54 est monté roratif autour de l'axe Z-Z' grâce à un roulement à billes 58 et à des bagues et rondelles anti-friction 59. La poutre 26 vient donc en appui sur la plaque de suspension 57 elle-même suspendue au moyen de manutention 16 par l'intermédiaire de l'anse 27, grâce au moyen 54 en appui sur le roulement à billes 58. Sur la face supérieure de la plaque de suspension 57 est fixé un support de poulie 60 constitué par deux plaques verticales parallèles 60a et 60b (voir fig. 4b).

Les poulies de renvoi 34 permettant le retour vers le bas des câbles 33a et 33b auxquels sont suspendus les boîtiers sont montées dans le support 60 par l'intermédiaire d'axes 61 sur lesquels les quatre poulies 34 sont montées folles et indépendantes. Deux poulies 34a servent au renvoi du câbl 33a de déplacement du boîtier 29 et deux poulies 34b au renvoi du câble 33b de commande du second boîtier monté mobile à l'intérieur du boîtier 29.

On va maintenant se référer aux fig. 4 et 4c pour décrire le montage des treuils 31 par rapport à la passerelle 17 et par rapport à la poutre 26.

Le support 32 des treuils est fixé par serrage grâce à une clé 62, sur la rembarde 17a de la passerelle 17 de la machine de chargement, lorsque la platine 28 de la poutre est mise en position sur la plaque inférieure de coeur 9 comme représenté sur la fig. 4. Les treuils 31 sont ainsi maintenus en position fixe par rapport à la passerelle 17 et la poutre 26 de grande longueur est maintenue au niveau des treuils dans une position fixe en translation dans le plan horizontal.

Le montage du support de treuil sur la poutre 26, comme il est visible aux fig. 4 et 4c, permet cependant de faire tourner la poutre autour de son axe Z-Z' pour déplacer l'extrémité de l'aiguille excentrée 35 et son introduction dans l'alésage de la manchette de traversée, comme il sera expliqué ci-après.

Le support 32 comporte un bras de fixation 63, un profil 66 pour la fixation du support 32 sur la rembarde 17a solidaire d'une des extrémités du bras 63 et un support profilé 64 en forme de U de grande ouverture fixé à l'autre extrémité du bras 63 par l'intermédiaire d'une articulation 65. Le support profilé 64 porte sur sa surface externe deux supports de treuils 67a et 67b dans lesquels sont montés les treuils 31a et 31b respectivement. Les treuils 31a et 31b sont à commande manuelle et comportent des manivelles 68a et 68b pour leur manoeuvre depuis la passerelle 17. Les câbles 33a et 33b des treuils ont un parcours incliné par rapport à la verticale entre les treuils 31 et les poulies de renvoi 34 puis un parcours vertical à l'intérieur de la poutre 26.

A l'intérieur du support profilé 64 est fixé, par l'intermédiaire de pattes de soudure un guide en forme de secteur annulaire ayant une gorge en U 69. La poutre 26 est rendue solidaire d'une portion de couronne 70 par l'intermédiaire de trois plats de fixation 72. Les plats de fixation 72 sont fixés par rivetage sur les faces de la poutre 26.

La portion de couronne 70 est montée rotative à l'intérieur de la pièce de guidage 69 avec interposition de bagues et de rondelles anti-friction 73.

On peut donc aisément manoeuvrer la poutre en rotation autour de son axe Z-Z' depuis la passerelle, les treuils restant parfaitement immobiles. On pourra donc placer très facilement la poutre dans une position angulaire extrêmement précise grâce au moyen d'indexage et de blocage à vis et à bille 30 disposé sur la base 42 de la poutre.

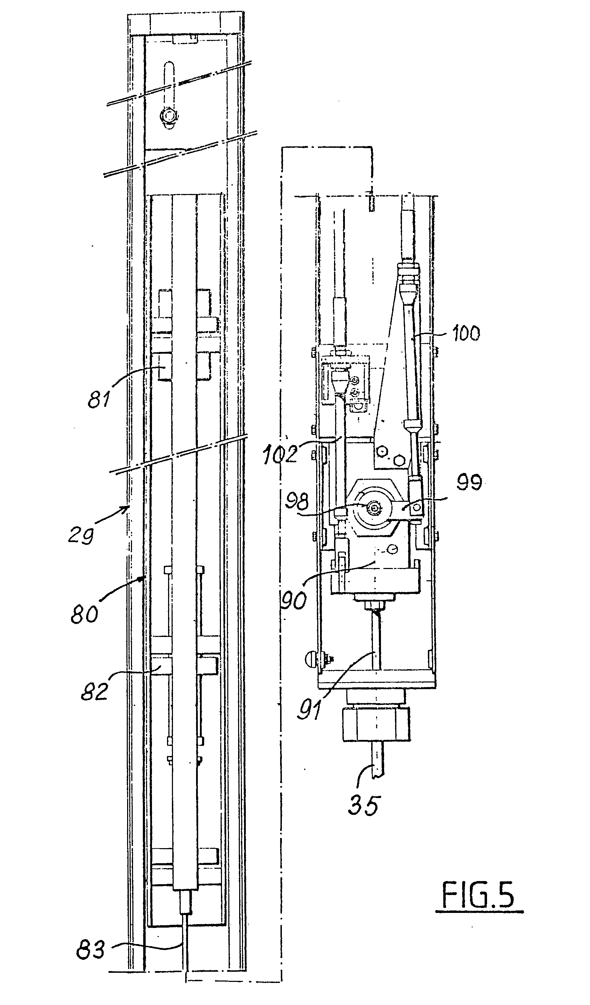

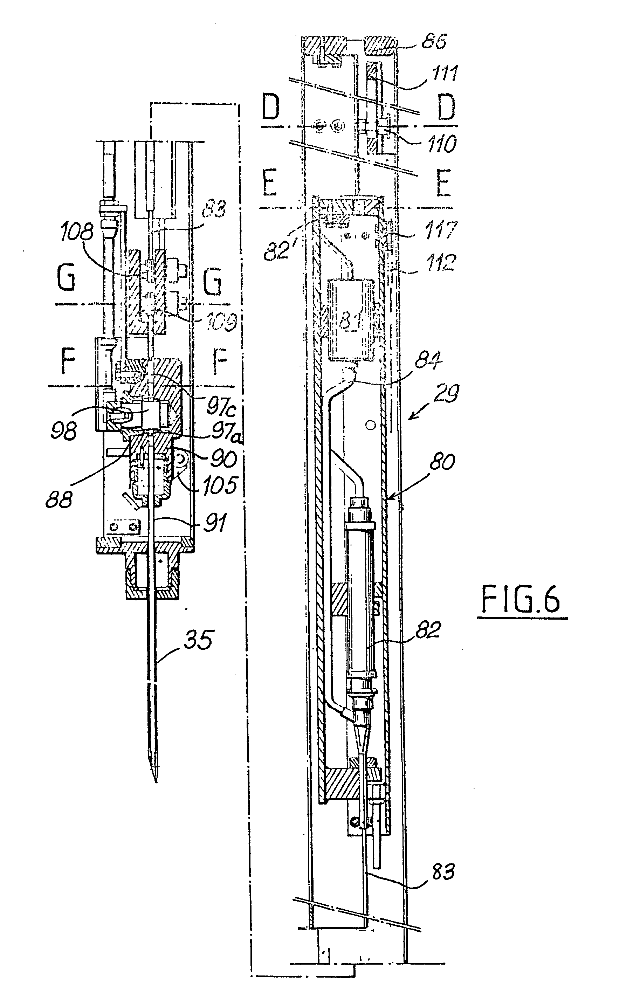

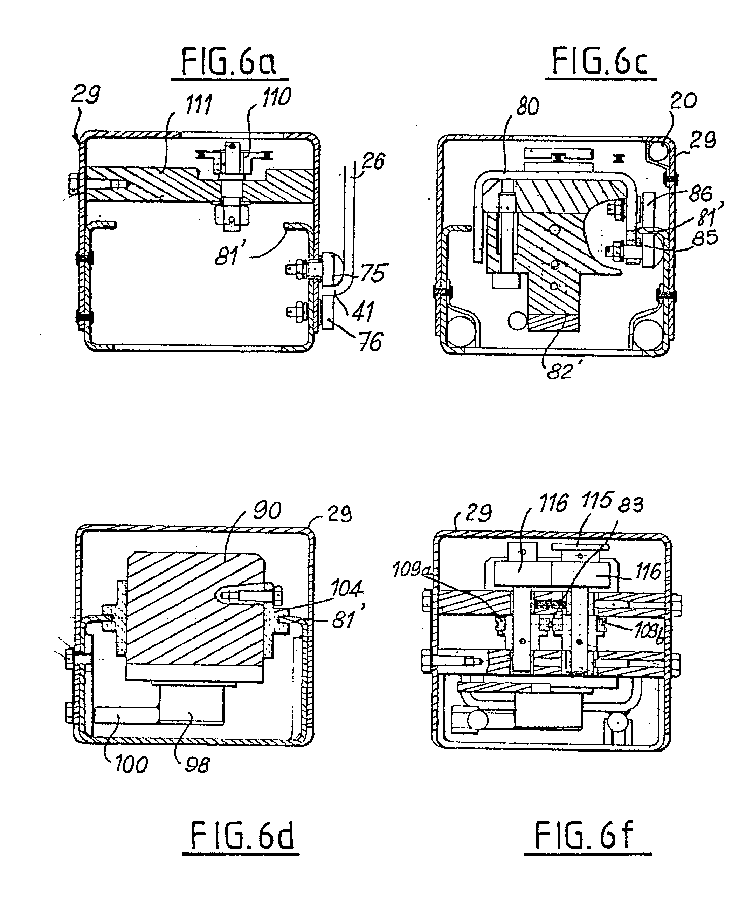

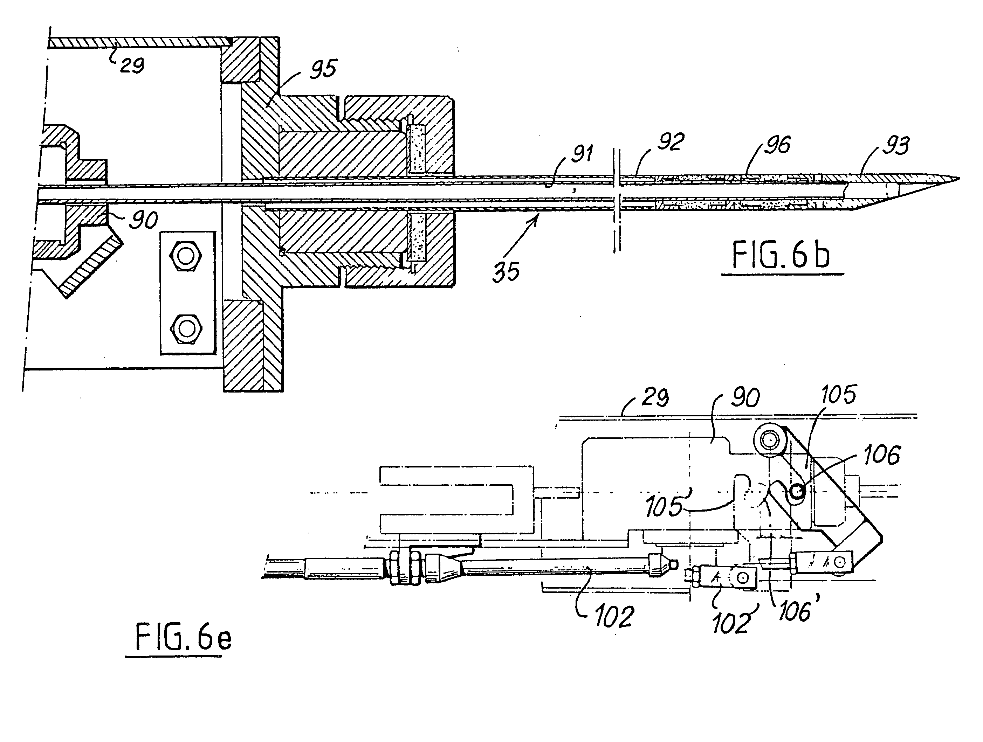

Sur les fig. 5 et 6, on voit l'ensemble du boîtier 29 portant à sa partie inférieure l'aiguille à pointe excentrée 35. Le boîtier 29, comme il est visible sur la fig. 6a est réalisé sous la forme d'une poutre-caisson par assemblage de deux profils et porte des ensembles de galets 75, 76 qui coopèrent avec la partie de guidage 41 de la poutre 26 pour le guidage du boîtier 29 dans la direction Z-Z' à l'intérieur de la poutre 26.

Comme il est visible sur les fig. 5 et 6 le boîtier 29 renferme un second boîtier 80 à l'intérieur duquel sont fixées une source lumineuse 81, une caméra de télévision 82 et une fibre optique 83 éclairée par la source 81 par l'intermédiaire d'un conduit optique 84 et constituant un fibroscope transmettant des images lumineuses à la caméra 82. Le fibroscope 83 est disposé suivant l'axe vertical commun aux boîtiers 29 et 80, c'est-à-dire suivant l'axe de l'alésage de l'aiguille 35.

Comme il est visible sur la fig. 6c, le boîtier 80 constitué par un profil métallique porte des galets de guidage 85 et 86 coopérant avec une partie plane de guidage 81' prévue à l'intérieur du boîtier 29. Le boîtier 80 est donc susceptible de se déplacer dans la direction verticale Z-Z' à l'intérieur du boîtier 29, le câble 33b de commande des déplacements du boîtier 80 étant fixé sur la plaque de fermeture supérieure 82' de ce boîtier 80.

Par déplacement du boîtier 80 à l'intérieur du boîtier 29, on obtient l'insertion et le déplacement du fibroscope à l'intérieur de l'aiguille creuse 35 ou au contraire son extraction.

Le boîtier 29 est lui-même fixé par l'intermédiaire de sa plaque de fermeture supérieure 86, à l'extrémité du câble 33a, si bien que son déplacement peut être commandé par le treuil 31a depuis la passerelle 17. Le déplacement du boîtier 29 à l'intérieur de la poutre 26 permet de déplacer l'aiguille creuse 35 dans la direction Z-Z' pour son introduction et son déplacement à l'intérieur de la colonne de guidage d'instrumentation, jusqu'au moment où l'aiguille creuse peut être introduite dans la manchette de traversée 7 se trouvant dans le prolongement de la colonne de guidage.

Dans sa partie inférieure, le boîtier 29 renferme la vanne trois voies 88 dont le corps 90 constitue dans sa partie inférieure un longement pour la fixation du tube intérieur 91 de l'aiguille creuse 35.

Ainsi qu'il est visible sur la fig. 6b, l'aiguillle creuse 35 comporte en effet un tube intérieur 91 portant à son extrémité la pointe excentrée 93 de l'aiguille et un tube extérieur 92 fixé sur la plaque de fermeture inférieure 95 du boîtier 29. Le tube extérieur 92 n'entoure le tube intérieur 91 que sur une partie de sa longuer, l'espace restant entre l'extrémité inférieur du tube 92 et la pointe excentrée 93 étant occupé par des joints 96 déformables par compression.

A l'intérieur du corps de vanne 90, le tube intérieur de l'aiguille 91 est en communication avec une des voies 97a de la vanne 88 qui se trouve dans son prolongement c'est à dire dans la direction verticale. Une seconde voie 97b percée dans le corps de vanne et non représentée communique latéralement avec le tube flexible 20 disposé a l'intérieur du boîtier 29 sur toute sa longueur pour parvenir à la vanne trois voies 88. Enfin, la troisième voie 97c de la vanne 88 se trouve dans le prolongement de la voie 97a de façon à pouvoir recevoir l'extrémité du fibroscope 83 lors des déplacements du boîtier 80 à l'intérieur du boîtier 29.

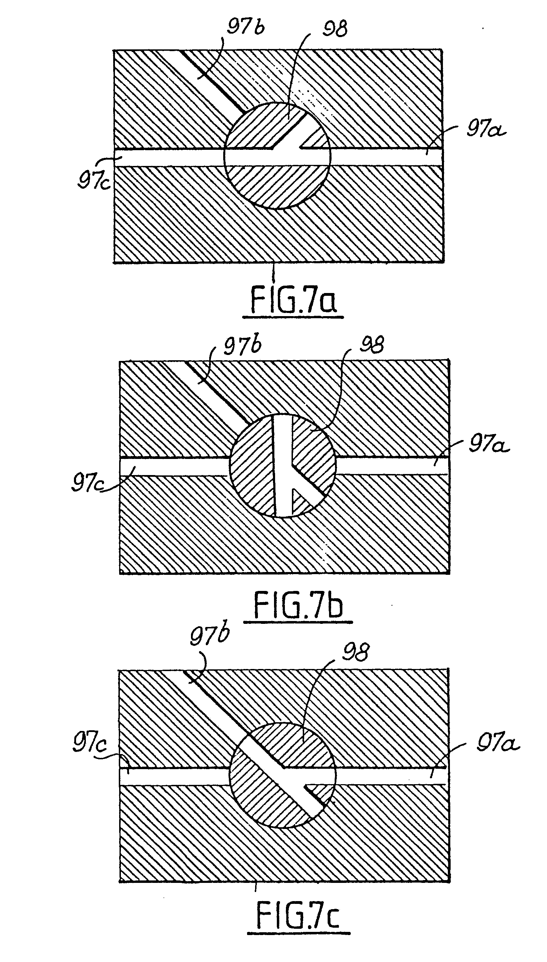

L'obturateur rotatif 98 de la vanne à trois voies 88 monté rotatif autour de son axe dans le corps de vanne 90 est commandé en rotation par une tringlerie 100 articulée sur un levier 99 permettant de le placer dans l'une des trois positions représentées sur les fig. 7a, 7b et 7c.

De plus, une tringlerie 102 permet de déplacer le corps de vanne 90 suivant la direction Z-Z' dans un sens ou dans l'autre, le corps de vanne 90 étant guidé grâce à des glisserières 104 disposées latéralement sur le corps de vanne 90 coopérant avec les parties de guidage 81' disposées à l'intérieur du boîtier 29 et servant également au guidage du second boîtier 80 renfermant le fibroscope.

Les tringleries 100 et 102 de commande de l'obturateur 98 et du déplacement du corps de vanne 90 sont relayées par des câbles de commande qui peuvent être actionnés depuis la passerelle 17 de la machine de chargement.

Le déplacement du boîtier 90 de la vanne à trois voies entraîne le déplacement dans le même sens du tube intérieur 91 de l'aiguille 35 qui est solidaire de ce corps de vanne 90. Le déplacement vers le haut du corps de vanne entraîne donc un déplacement dans le même sens de la pointe excentrée 93 de l'aiguille et une compression des joints 96 qui se dilatent diamétralement.

Sur la fig. 6e, on voit que le corps de vanne 90 peut être placé dans l'une ou l'autre de deux positions grâce à un pièce d'actionnement 105 agissant sur le corps de vanne 90 par l'intermédiaire d'un tourillon 106. La position de recul du corps de vanne 90 qui correspont à la position 106' du tourillon 106 est obtenue par traction sur la tringlerie 102. La pièce d'actionnement 105 articulée sur le boîtier 29 vient alors en position 105'. Cette position correspond à l'état dilaté des joints 96 de l'aiguille 35.

Comme il est visible sur les fig. 6 et 6f, le boîtier 29 comporte également dans sa partie inférieure juste au-dessus de la vanne à trois voies 88, deux jeux de deux poulies 108 et 109 entre lesquelles est pincé le fibroscope 83.

A l'extrémité supérieure du boîtier 29 est montée une poulie à chaîne 110 à l'intérieur d'un dispositif tendeur de chaîne 111. Une chaîne 112 passe sur la poulie à chaîne 110 et à l'autre extrémité du boîtier 29 sur deux poulies à chaîne 115 sur les axes desquels sont montés des engrenages 116 à denture droite permettant l'entraînement en rotation des poulies 109a et 109b entre lesquelles est pincé le fibroscope 83, lorsque les polies 115 sont entraînées en rotation. Cette mise en rotation des poulies 115 est provoquée par le déplacement du boîtier 80, la chaîne 112 étant rendue solidaire de ce boîtier 80 par un dispositif pinceur de chaîne 117 disposé latéralement sur le boîtier 80.

Lors des mouvements du boîtier 80 renfermant le fibroscope 83, les poulies 109 constituent donc un dispositif tireur et pousseur qui permet de maintenir le fibroscope parfaitement tendu.

On évite ainsi la déformation et le blocage du fibroscope souple lors de son introduction dans l'aiguille creuse 35.

Sur les fig. 7a, 7b et 7c on a montré de façon schématique les trois positions de la vanne à trois voies 88.

La position I correspondant à la fig. 7a permet de réaliser l'alignement des voies 97a et 97c. Dans cette position, le fibroscope 83 peut être introduit par descente du boîtier 80 à l'intérieur du boîtier 29, dans le tube intérieur 91 de l'aiguille 35 jusqu'à l'extrémité 93 de celle-ci. Le fibroscope 83 associé à la caméra 82 permet alors de contrôler depuis la passerelle 17 où parviennet les câbles de la caméra, la pose de la platine 28 sur la plaque inférieure de coeur, l'absence d'obstacle dans la colonne de guidage d'instrumentation au cours de l'introduction de l'aiguille 35 et, lorsque cette aiguille 35 a été introduite dans la colonne de guidage de l'instrumentation, jusqu'à un niveau situé en peu au-dessus du niveau supérieur de la machette de traversée 7, le fibroscope permet de déterminer l'orientation à donner à l'aiguille excentrée 35 par rotation de la poutre pour la faire pénétrer dans l'alésage intérieur de la manchette de traversée 7.

La descente la l'aiguille 35 à l'intérieur de la colonne de guidage d'instrumentation, puis dans l'alésage de la manchette 7 est ainsi contrôlée à toutes les étapes par le fibroscope. Le mouvement vers le bas de l'aiguille 35 est obtenu par déplacement du boîtier 29 à l'intérieur de la poutre 26.

Pour éviter une fausse manoeuvre, c'est à dire pour éviter de manoeuvrer l'obturateur 98 de la vanne à trois voies pour le mettre dans la position représentée à la fig. 7b ou à la fig. 7c pendant que le fibroscope est dans sa position d'inspection à l'intérieur de l'aiguille 35, on provoque un débrayage automatique de la commande à distance 100 de l'obturateur 98, lorsque le boîtier 80 du fibroscope quitte sa position haute pour un mouvement de descente provoquant l'introduction du fibroscope dans la vanne à trois voies puis dans l'aiguille 35. Pour cela, un détecteur de position placé dans le boîtier 29 à l'arrière du boîtier 80 du fibroscope en position haute est relié à la commande de débrayage de la tringlerie 100.

Dans sa position II représentée à la fig. 7b, l'obturateur 98 de la vanne à trois voies ferme l'ensemble des communications entre les voies 97a, 97b et 97c.

Enfin, dans sa position III représentée à la fig. 7c, l'obturateur 98 de la vanne à trois voies met en communication la voie 97a communiquant avec le conduit intérieur 91 de l'aiguille 35 avec la voie 97b communiquant avec le tube souple 20 relié à l'unité de filtration des effluents.

On va maintenant décrire rapidement une opération de nettoyage d'un tube de guidage 5 du réacteur nucléaire en utilisant le dispositif de récupération des effluents 15 qui a été décrit.

La poutre 26 est mise, grâce au treuil de manutention 16 dont la position dans le plan horizontal est indexable, à la verticale d'une position d'assemblage recevant le tube d'instrumentation. La platine inférieure 28 de la poutre est descendue jusq'à un niveau situé à 0,50 m au-dessus de la plaque inférieure de coeur. Le premier boîtier 29 est dans sa position de recul, c'est à dire dans sa position haute.

On place alors la vanne trois voies sur sa position I et on introduit le fibroscope dans l'aiguille 35 à l'aide du treuil manuel 31b de déplacement du boîtier 80. Le boîtier 80 du fibroscope ayant quitté sa position haute, la vanne à trois voies 88 se verrouille en position I. Le boîtier du fibroscope 29 descend jusque dans sa position la plus basse, l'extrémité du fibroscope 83 étant alors légèrement saillante par rapport à l'extrémité de l'aiguille 35 qui est elle-même au-dessus de l'embase 42. On débraye le treuil 31b de commande du boîtier du fibroscope et l'on descend le boîtier 29 grâce au treuil manuel 31a jusqu'au moment où l'extrémité de l'aiguille 35 est dans une position très légèrement en retrait par rapport à la face de pose de la platine 28 sur la plaque inférieure de coeur 9. On descend alors la poutre 26 à l'aide du treuil de manutention 16 et l'on place la platine 28 sur la plaque inférieure de coeur en contrôlant les manoeuvres grâce au fibroscope et à la caméra. On poursuit alors la descente du boîtier 29 et de l'aiguille 35 qui pénètre dans la colonne d'instrumentation par l'embout de guidage 25. Pendant toute cette descente, le fibroscope 83 permet de vérifier qu'il n'y a pas d'obstacle au déplacement de l'aiguille 35 dans cette colonne de guidage d'instrumentation.

On arrête la descente du boîtier 29 et de l'aiguille 35 dans la poutre 26 lorsque la pointe 93 de l'aiguille 35 est parvenue à 5 cm au-dessus du niveau supérieur de la manchette de pénétration 7.

On oriente alors la tête excentrée 93 de l'aiguille 35 par rotation de la poutre 26 commandée depuis la passerelle de façon que la pointe excentrée de l'aiguille se trouve le plus près possible de l'axe de pénétration de la manchette 7. Cette manoeuvre permet en particulier de réaliser une bonne pénétration de l'aiguille même si la manchette est assez fortement désaxée par rapport à la colonne de guidage. On rétracte alors le fibroscope 83 de quelques centimètres et on introduit l'aiguille 35 dans la manchette 7 de 10 cm environ. On obtient alors la compression et l'expansion diamétrales des joints 96 de l'aiguille en soulevant le corps 90 de la vanne à trois voies pour la mettre dans sa position haute 90'. On vérifie que les joints 96 réalisent bien une fermeture étanche entre l'aiguille et l'alésage intérieur de la manchette 7.

On extrait le fibroscope 83 et lorsque le boîtier du fibroscope 80 arrive en position haute, la vanne à trois voies est déverrouillée. On met alors cette vanne à trois voies 88 sur la position II, puis on ouvre le raccord 19 d'injection, puis on branche la pompe 18 d'injection d'eau déminéralisée dans le tube de guidage correspondant dans le local d'instrumentation 4. La vanne à trois voies 88 est mise dans sa position III, puis l'on provoque l'injection d'eau déminéralisée dans le tube de guidage si bien que le tube flexible 20 peut entraîner les effluents vers le poste de filtration 21. On poursuit l'injection pour effectuer un nettoyage complet du tube de guidage 5 et du doigt de gant 6. On met alors la vanne en position II de fermeture, on débranche la pompe 18 d'injection et on referme le raccord 19 d'injection.

On remet la vanne trois voies en position I et on introduit le fibroscope 83 dans l'aiguille 35 en le laissant en retrait de quelques centimètres par rapport à l'extrémité 93 de l'aiguille. La vanne à trois voies 88 est alors verrouillée en position I. On décomprime les joints 96 et on contrôle la course de la vanne à trois voies 88.

On débraye le treuil 31b de déplacement du fibroscope et l'on remonte le boîtier 29 jusqu'à ce que la pointe excentrée 93 et l'aiguille 35 soient au niveau de la platine 28.

On replace la poutre 26 en rotation dans sa position de départ par rapport à la platine 28 et on remonte cette poutre de 0,50 m au-dessus de la plaque inférieure de coeur 9.

On vient placer grâce au dispositif de manutention 16 la poutre au-dessus d'une seconde position d'assemblage comportant une instrumentation.

On voit que le dispositif suivant l'invention présente l'avantage de permettre un nettoyage des tubes de guidage d'instrumentation avec récupération des effluents radio-actifs à la sortie des manchettes de traversée du fond de cuve, sans extraire les équipements internes inférieurs de la cuve du réacteur, ce qui présente beaucoup d'avantages et réduit considérablement la durée et le coût de l'opération.

L'invention ne se limite pas au mode de réalisation qui a été décrit. C'est ainsi qu'on peut immaginer des variantes de réalisation des différents éléments constituant le dispositif de récupération des effluents à la sortie des manchettes de traversée.

On peut également imaginer des dispositifs de contrôle optiques télévisuels par fibroscope et caméra de télévision différents de celui qui a été décrit.

Enfin, le dispositif de nettoyage suivant l'invention s'applique à tous les réacteurs nucléaires à eau sous pression comportant des tubes de guidage des moyens de mesure de flux neutronique dans le coeur.

## Revendications

1. Dispositif de nettoyage des tubes de guidage (5) de moyens de mesure de flux neutronique dans un réacteur à eau sous pression à l'arrêt comportant une cuve (1) renfermant des équipements internes (9, 40) de support et de maintien des assemblages combustibles du coeur, ou équipments internes inférieurs disposés au-dessus du fond de cuve bombé (2) et comportant en particulier, une plaque de support du coeur (9) horizontale, une piscine (10) communiquant avec le volume intérieur de la cuve (1), l'ensemble étant rempli d'eau, une machine de chargement du combustible mobile au-dessus de la piscine (10) dans un plan horizontal comportant en particulier une passerelle (17) et un treuil de mantuention (16) dans la direction verticale susceptible de venir à la verticale de tous les points du fond bombé (2) un bâtiment renfermant la piscine (10) et la cuve (1), cette dernière étant disposée à l'intérieur d'un puits de cuve (3) ainsi qu'un local d'instrumentation (4) disposé latéralement par rapport au puits de cuve (3) dans lequel pénètre l'une des extrémités des tubes de guidage (5) joignant chacun par un parcours comportant un coude (5a), le local d'instrumentation (4) au volume intérieur de la cuve (1) dans lequel le tube de guidage (5) débouche par une manchette verticale (7) de traversée du fond de cuve (2) dans l'alignement d'une colonne de guidage (24) dont le conduit central de guidage débouche sur la face supérieure de la plaque de support de coeur (9) au niveau d'une traversée correspondant à une position de pénétration des moyens de mesure de flux dans un assemblage, le dispositif de nettoyage comportant des moyens d'injection d'eau déminéralisée (18, 19) dans chacun des tubes de guidages (5) disposé dans le local d'instrumentation (4) et des moyens de récupération (15, 20, 21, 22) de l'eau chargée en particules radio-actives à la sortie de la manchette verticale (7) comportant un tube flexible (20) relié à une station de filtration (21) disposée au-dessus de la piscine du combustible, caractérisé par le fait , que les moyens de récupération comportent:

une poutre profilée creuse (26) suspendue verticalement par sa partie supérieure au treuil de manutention (16), par l'intermédiaire d'un élément de suspension (27, 57) sur lequel la poutre (26) est montée rotative autour de son axe vertical Z-Z,

une platine de fixation (28) montée à l'extrémité inférieure de la poutre (26) rotative autour de l'axe vertical Z-Z de la poutre (26) et comportant des premiers moyens de positionnement (47, 49) destinés à coopérer avec des seconds moyens de positionnement (48, 51) correspondant à un assemblage prévu sur la plaque de support du coeur (9) et des moyens de blocage (30) en des positions angulaires fixes de la poutre (26) sur la platine (28),

un premier boîtier (29) monté mobile dans la poutre (26) dans sa direction axiale portant une aiguille creuse (35) à pointe excentrée (93), de direction axiale, à son extrémité inférieure, munie de joints déformables (96) sur sa surface externe, et

un vanne à trois voies (88) dont une voie (97a) communique avec l'espace intérieur de l'aiguille (35), une seconde voie (97b) avec le tube flexible (20) et dont la troisième voie (97c) est dans le prolongement de la première (97a),

un second boîtier (80) portant une source lumineuse (81), un fibroscope (83) et une caméra de télévision (82), mobile dans le premier boîtier (29) au-dessus de la vanne à trois voies, pour l'introduction du fibroscope (83) et son déplacement dans l'aiguille creuse (35), par l'intermédiaire de la vanne à trois voies (88),

deux treuils (31a, 31b) de commande du déplacement axial des boîtiers (29, 80) associés chacun à un boîtier et fixés sur la passerelle (17) de la machine de chargement par l'intermédiaire d'un support (32) dans lequel la poutre (26) est montée rotative autour de son axe vertical Z-Z', et

des moyens de visualisation et de commande disposés sur la passerelle (17) de la machine de chargement pour la mise en place contrôlée de l'aiguille (35) dans l'alésage de la manchette (7).

2. Dispositif de nettoyage suivant la revendication 1, caractérisé par le fait que l'aiguille creuse (35) est constituée par deux tubes coaxiaux (91, 92), un tube intérieur (91) portant une pointe excentrée (93) à son extrémité inférieure, fixé sur le corps (90) de la vanne à trois voies (88) qui est monté mobile dans la direction verticale Z-Z' à l'intérieur du premier boîtier (29) et un tube intérieur (92) solidaire du boîtier (29) ayant son extrémité inférieure au-dessus de la pointe excentrée (93) qui est légèrment saillante radialement par rapport au tube intérieur (91), les joints déformables (96) étant intercalés entre l'extrémité inférieure du tube extérieur (92) et la pointe excentrée (93) de façon que le déplacement du corps de vanne (90) dans le sens de la montée provoque la compression et l'expansion diamétrale des joints (96).

3. Dispositif de nettoyage suivant l'une quelconque des revendications 1 et 2, caractérisé par le fait que le fibroscope (83) est engagé entre sa sortie du second boîtier (80) et la vanne à trois voies (88), entre deux jeux de poulies (109a, 109b) assurant son pincement, reliées par un ensemble cinématique comportant des poulies (110, 115) des engrenages (116) et une chaîne (112) au second boîtier (80) de façon que les poulies (109a, 109b) de pincement du fibroscope (83) soient entraînées en rotation pour exercer une traction ou une poussée sur le fibroscope (83) pendant les déplacements du second boîtier (80) et du fibroscope dans un sens ou dans l'autre à l'intérieur de l'aiguille creuse (35).

4. Dispositif de nettoyage suivant l'une quelconque des revendications 1, 2 et 3, caractérisé par le fait que la vanne à trois voies (88) comporte un obturateur (98) commandé par un ensemble de commande (100) pour son passage d'une position d'ouverture ou de fermeture à une autre, l'une des positions d'ouverture ou première position correspondant à la mise en communication de la première voie (97a) et de la troisième voie (97c) pour le passage du fibroscope (83) et son introduction dans l'aiguille creuse (35) et que l'ensemble de commande (100) est asservi à un détecteur de la position du second boîtier (80) disposé dans le premier boîtier (29) de façon que la manoeuvre de l'obturateur ne soit possible que lorsque le boîtier (80) est dans sa position la plus haute, à l'intérieur du premier boîtier (29).

**Patentansprüche**

1. Vorrichtung zur Reinigung der Führungsrohre (5) der Mittel zur Neutronenflussmessung in einem Druckwasserreaktor bei der Unterbrechung, umfassend einen Behälter (1), der die inneren Einrichtungen (9, 40) zum Stützen und zum Haltern der Brennelementbündel des Kerns oder innere untere Einrichtungen enthält, die oberhalb des gewölbten Behälterbodens (2) angeordnet sind, und insbesondere eine horizontale Platte zum Stützen des Kerns (9), ein mit dem inneren Volumen des Behälter (1) in Verbindung stehendes Reaktorbecken (10), wobei der Aufbau mit Wasser gefüllt ist, eine bewegliche Maschine zum Beschicken mit Brennstoff oberhalb des Reaktorbeckens (10) in einer horizontalen Ebene, umfassend insbesondere einen Bedienungsgang (17) und eine Winde (16) zum Fördern in der vertikalen Richtung, die geeignet ist, in der Vertikalen zu sämtlichen Punkten des gewölbten Bodens (2) zu gelangen, ein das Reaktorbecken (10) und den Behälter (1), wobei letzterer im Inneren eines Behälterschachtes (3) angeordnet ist, enthaltendes Gebäude sowie einen Instrumentenraum (4) umfasst, der seitlich in bezug auf den Behälterschacht (3) angeordnet ist, in den eines der Ender der Führungsrohre (5) mündet, die sich jeweils durch einen Weg vereinigen, umfassend einen Krümmer (5a), den Instrumentenraum (4) im Innenvolumen des Behälters (1), in den das Führungsrohr (5) durch eine vertikale Manschette (7) zur Durchführung des Behälterbodens (2) in der Ausrichtung einer Führungssäule (24) mündet, deren zentraler Führungskanal auf der Oberseite der Kernstützplatte (9) in Höhe einer Durchführung entsprechend einer Eindringposition der Mittel zur Flussmessung in einem Bündel mündet, wobei die Reinigungsvorrichtung Mittel zur Zuführung von vollentsalztem Wasser (18, 19) in jedem der Führungsrohre (5), angeordnet im Instrumentenraum (4), und Mittel zur Wiedergewinnung (15, 20, 21, 22) des mit radioaktiven Partikeln belasteten Wassers am Ausgang der vertikalen Manschette (7) umfasst, umfassend ein flexibles Rohr (20), das mit einer oberhalb des Reaktorbeckens des Brennstoffs angeordneten Filterstation (21) verbunden ist, dadurch gekennzeichnet, dass die Mittel zur Wiedergewinnung umfassen:

einen hohlen profilversehenen Träger (26), der an seinem oberen Tel an der Förderwinde (16) mittels eines Aufhängungselementes (27, 57) vertikal aufgehängt ist, an dem der Träger (26) um seine vertikale Achse Z-Z' drehbar angebracht ist,

eine Befestigungsplatte (28), die am unteren Ende des Trägers (26) um die vertikale Achse Z-Z' des Trägers (26) drehbar angebracht ist und erste Positioniermittel (47, 49), die zum Zusammenwirken mit zweiten Positioniermitteln (48, 51) entsprechend einem auf der Stützplatte des Kerns (9) vorgesehenen Aufbau bestimmt sind, und Verriegelungsmittel (30) in festen Winkelpositionen des Trägers (26) auf der Platte (28) umfasst,

ein erstes Gehäuse (29), das im Träger (26) in dessen axialer Richtung beweglich angebracht ist, tragend eine hohle Nadel (35) mit aus dem Zentrum gebrachter Spitze (93) mit axialer Richtung an ihrem unteren Ende, die an ihrer Aussenfläche mit deformierbaren Verbindungsstellen (96) ausgestattet ist, und

ein Dreiwegeventil (88), von dem ein Weg (97a) mit dem Innenraum der Nadel (35) in Verbindung steht, ein zweiter Weg (97b) mit dem flexiblen Rohr (20) und von dem der dritte Weg (97c) in der Verlängerung des ersten (97a) ist,

ein zweites Gehäuse (80) tragend eine Lichtquelle (81), ein Fibroskop (83) und eine Fernsehkamera (82), beweglich im ersten Gehäuse (29) oberhalb des Dreiwegeventils für die Einführung des Fibroskops (83) und dessen Vestellung in der hohlen Nadel (35) mittels des Dreiwegeventils (88),

zwei Winden (31a, 31b) zur Betätigung der axialen Verstellung der Gehäuse (29, 80), die jeweils einem Gehäuse zugeordnet sind und auf dem Bedienungsgang (17) der Beschickungsmaschine mittels einer Stütze (32) befestigt sind, in der der Träger (26) um seine vertikale Achse Z-Z' drehbar angebracht ist, und

Mittel zur optischen Anzeige und zur Betätigung, die auf dem Bedienungsgang (17) der Beschickungsmaschine zur kontrollierten Anordnung der Nadel (35) in der Bohrung der Manschette (7) angeordnet sind.

2. Reinigungsvorrichtung nach Anspruch 1, dadurch gekennzeichnet, dass die hohle Nadel (35) durch zwei koaxiale Rohre (91, 92) gebildet ist, wobei ein Innenrohr (91) eine aus dem Zentrum gebrachte Spitze (93) an seinem unteren Ende, am Körper (90) des Dreiwegeventils (88) befestigt, trägt, das in der vertikalen Richtung Z-Z' im Inneren des ersten Gehäuses (29) beweglich angebracht ist, und wobei sich das untere Ende eines fest mit dem Gehäuse (29) verbundenen Innenrohres (92), das radial in bezug auf das Innenrohr (91) etwas vorspringt, oberhalb der aus dem Zentrum gebrachten Spitze (93) befindet, wobei die deformierbaren Verbindungsstellen (96) zwischen dem unteren Ende des Aussenrohrs (92) und der aus dem Zentrum gebrachten Spitze (93) derart verschachtelt sind, dass die Verstellung des Ventilkörpers (90) in der Aufstiegrichtung die Kompression und die diametrale Expansion der Verbindungsstellen (96) hervorruft.

3. Reinigungsvorrichtung nach einem beliebigen der Ansprüche 1 und 2, dadurch gekennzeichnet, dass sich das Fibroskop (83) zwischen seinem Austritt aus dem zweiten Gehäuse (80) und dem Dreiwegeventil (88) zwischen zwei Rollensätzen (109a, 109b) in Eingriff befindet, die seine Klemmung gewährleisten, die durch einen kinematischen Aufbau verbunden sind, umfassend Rollen (110, 115) der Zahnräder (116) und eine Kette (112) am zweiten Gehäuse (80) derart, dass die Rollen (109a, 109b) zur Klemmung des Fibroskops (83) in Rotation mitgeführt werden, um einen Zug oder einen Druck auf das Fibroskop (83) während der Verstellungen des zweiten Gehäuses (80) und des Fibroskops in einer oder in der anderen Richtung im Inneren der hohlen Nadel (35) auszuüben.

4. Reinigungsvorrichtung nach einem beliebigen der Ansprüche 1, 2 und 3, dadurch gekennzeichnet, dass das Dreiwegeventil (88) einen durch einen Steueraufbau (100) betätigten Verschluss (98) für seine Durchführung von einer Öffnungs- oder Schliessposition in eine andere umfasst, wobei eine der Positionen zum Öffnen oder erste Position entsprechend dem in Verbindungsetzen des ersten Weges (97a) und des dritten Weges (97c) für die Durchführung des Fibroskops (83) und seine Einführung in die hohle Nadel (35) entspricht, und dass der Steueraufbau (100) mit einem Detektor für die Position des zweiten Gehäuses (80) gesteuert ist, der in dem ersten Gehäuse (29) derart angeordnet ist, dass die Betätigung des Verschlusses nicht möglich ist, wenn das Gehäuse (80) in der höchsten Position im Inneren des ersten Gehäuses (29) ist.

**Claims**

1. A device for cleaning the guiding tubes (5) for the neutron flux measuring means, in a pressurised water nuclear reactor during shut down, comprising a vessel (1) containing the internal equipment (9, 40) for supporting and holding the combustible assemblies of the core, of the lower internal equipment disposed above the dished bottom (2) of the vessel and comprising in particular a horizontal core support plate (9), a pool (10) communicating with the internal space of the vessel (1), the whole being filled with water, a machine for charging the movabel fuel above the pool (10) in a horizontal plane comprising in particular a catwalk (17) and a manipulating hoist (16) in the vertical direction capable of coming to the vertical of all points of the dished bottom (2), a building containing the pool (10) and the vessel (1), the latter being disposed within a vessel well (3), as well as an instrumentation station (4) disposed laterally in relation to the vessel well (3) into which there penetrates one of the ends of the guiding tubes (5) joining each one via a path comprising a knee (5a), the instrumentation station (4) in the internal space of the vessel (1) into which the guiding tube (5) issues via a vertical sleeve (7) passing through the vessel bottom (2) in alignment with one guiding column (24) whose central guide duct issues on the upper side of the core support plate (9) at the level of a passage corresponding to one position where the flux measurement means penetrate into one assembly, the cleaning device comprising means (18, 19) for injecting demineralised water into each one of the guiding tubes (5) disposed in the instrumentation station (4) and means (15, 20, 21, 22) for recovering the water charged with radioactive particles at the outlet of the vertical sleeve (7) comprising a flexible tube (20) connected to a filtration station (21) disposed above the pool for the fuel, characterised in that the recovery means comprise:

a hollow profiled girder (26) vertically suspended at its upper portion on the manipulating hoist (16) by means of a suspension element (25, 57) whereon the girder (26) is mounted for rotation around its vertical axis Z-Z',

a fixing plate (28) mounted at the lower end of the rotatable girder (26) around the vertical axis Z-Z' of the girder (26) and comprising first positioning means (47, 49) intended to cooperate with second positioning means (48, 51) corresponding to one assembly provided on the core support plate (9) and means (30) for blocking the girder (26) in fixed angular positions on the plate (28),

a first casing (29) movably mounted in the girder (26) in its axial direction carrying a hollow needle (35) with an axially directed eccentric point (93) at ist lower end, provided with deformabel seals (96) on its external surface, and

a three way valve (88), whereof one channel (97a) communicates with the internal space of the needle (35), a second channel (97b) with the flexible tube (20) and whose third channel (97c) is in the extension of the first (97a),

a second casing (80) carrying a light source (81), a fibroscope (83) and a television camera (82) movable in the first casing (29) above the three way valve for the insertion of the fibroscope (83) and its displacement in the hollow needle (35), by means of the three way valve 88,

two hoists (31a, 31b) controlling the axial displacement of the casings (29, 80), each associated with one casing and fixed on the catwalk (17) of the charging machine by means of a support (32) wherein the girder (26) is mounted for rotation around its vertical axis (Z-Z'), and

means for visualisation and control disposed on the catwalk (17) of the charging machine for the controlled positioning of the needle (35) in the bore of the sleeve (7).

2. A clenaning device according to claim 1, characterised in that the hollow needle (35) is constituted by two coaxial tubes (91, 92), one internal tube (91) carrying an eccentric point (93) at its lower end fixed on the body (90) of the three way valve (88) which is movably mounted in the vertical direction Z-Z' inside the first casing (29) and an external tube (92) integral with the casing (29) having its lower end above the eccentric point (93) which slightly projects radially in relation to the internal tube (91), the deformable seals (96) being interposed between the lower end of the external tube (92) and the eccentric point (93) so that the displacement of the valve body (90) in the rising direction produced the compression and diametrical expansion of the seals (96).

3. A cleaning device according to any one of claims 1 and 2, characterised in that the fibroscope (83) is engaged between the outlet of the second casing (80) and the three way valve (88) between two sets of pulleys (109a, 109b) ensuring its tight hold, connected by a kinetic assembly comprising pulleys (110, 115) of the pinions (116) and a chain (112) to the second casing (80) so that the pulleys (109a 109b), gripping the fibroscope (83) should be driven in rotation in order to exert a pull or a push on the fibroscope (83) during the displacements of the second casing (80) and of the fibroscope in one direction or the other within the hollow needle (35).

4. A cleaning device according to any one of claims 1, 2 and 3, characterised in that the three way valve (88) comprises an obturator (98) controlled by a control assembly (100) to make it pass from one open or closed position to another, the one of the opening positions, or first position corresponding to the communication of the first channel (97a) and the third channel (97c) for the passing of the fibroscope (83) and its introduction into the hollow needle (35), and that the control assembly is directed by a detector of the position of the second casing (80) disposed in the first casing (29) so that the manipulation of the obturator should only be possible when the casing (80) is in its uppermost position inside the first casing (29).

# FIG.1

FIG.2

FIG.3

0 185 561

# FIG.4

FIG.4a.

FIG.4b

FIG.4c

FIG.5

FIG.6

# FIG.6a

# FIG.6c

# FIG.6d

# FIG.6f

0 185 561

29

95

91    92    96    93

90

35

**FIG.6b**

29    90    105

105    106

102    102    106'

**FIG.6e**

FIG.7a

FIG.7b

FIG.7c